# EUROPEAN PATENT APPLICATION

(11) **EP 4 230 692 A1**
(43) Date of publication of application: **23.08.2023**
(21) Application number: 21880146.2
(22) Date of filing: 13.10.2021
(51) Int. Cl.: C08L 1/02, C08G 69/26

(54) **COMPOSITION**

(30) Priority: 14.10.2020 JP 2020173289
(71) Applicant: Resonac Corporation, Tokyo 105-8518 (JP)
(72) Inventor: IMAI Tetsuya, Tokyo 100-6606 (JP); MIYAMOTO Yuki, Tokyo 100-6606 (JP); SAKAMOTO Keiichi, Tokyo 100-6606 (JP); WATANABE Masaru, Tokyo 100-6606 (JP); KUMAKI Takashi, Tokyo 100-6606 (JP)
(74) Representative: Berggren Oy
(86) International application number: PCT/JP2021/037887
(87) International publication number: WO 2022/080408

(57) **Abstract**

Disclosed is a composition containing: a cross-linked body of a hydrophilic polymer having a cross-linkable functional group; and a photo-radical generating agent. The cross-linked body is a hydrophilic polymer cross-linked through a disulfide bond.

## Description

### Technical Field

The present disclosure relates to a composition.

### Background Art

It has been studied that a hydrophilic polymer such as carboxymethyl cellulose and a cross-linked body thereof are used in various applications such as a scaffold material for a cell culture (for example, Non Patent Literature 1).

### Citation List

### Non Patent Literature

Non Patent Literature 1: International Journal of Biological Macromolecules 134 (2019) 413-421

### Summary of Invention

### Technical Problem

An object of one aspect of the present invention is to provide a photo-melting composition containing a cross-linked body of a hydrophilic polymer.

### Solution to Problem

One aspect of the present invention relates to a composition containing: a cross-linked body of a hydrophilic polymer having a cross-linkable functional group; and a photo-radical generating agent, in which the cross-linked body is a hydrophilic polymer cross-linked through a disulfide bond.

Since the composition contains the cross-linked body of the hydrophilic polymer having the cross-linkable functional group, and the photo-radical generating agent, and the cross-linked body is the hydrophilic polymer cross-linked through the disulfide bond, the composition exhibits photo-melting properties.

A mechanism in which such an effect is obtained, for example, is assumed as follows, but the present invention is not limited thereto. In a case where the composition is irradiated with light, the disulfide bond is cracked (cleaved) by a reaction between the disulfide bond and the photo-radical generating agent. It is assumed that the cross-linked structure of the cross-linked body of the hydrophilic polymer is also cracked in accordance with the cleavage of the disulfide bond, the molecular weight is lowered, and the composition is melted. Such a reaction can be referred to as an irreversible reaction.

The cross-linkable functional group may include at least one type of group selected from the group consisting of a carboxy group and an amino group. The hydrophilic polymer may be carboxymethyl cellulose.

The cross-linked body may be a condensation reaction product of the hydrophilic polymer and a reactive compound having a disulfide bond and a reactive group capable of forming a bond by a reaction with the cross-linkable functional group.

The cross-linked body may be a condensation reaction product of a hydrophilic polymer having a carboxy group and a reactive compound having a disulfide bond and an amino group, or a condensation reaction product of a hydrophilic polymer having an amino group and a reactive compound having a disulfide bond and a carboxy group.

### Advantageous Effects of Invention

According to one aspect of the present invention, it is possible to provide the photo-melting composition containing the cross-linked body of the hydrophilic polymer.

### Brief Description of Drawings

FIG. 1 is a picture showing an evaluation result of photo-melting properties of compositions of Examples 1 to 3.
FIG. 2 is a picture showing an evaluation result of photo-melting properties of a composition of Example 4.
FIG. 3 is a picture showing an evaluation result of photo-melting properties of compositions of Examples 5 to 7.
FIG. 4 is a picture showing an evaluation result of photo-melting properties of a composition of Example 8.
FIG. 5 is a picture showing an evaluation result of photo-melting properties of compositions of Examples 9 to 11.
FIG. 6 is a picture showing an evaluation result of photo-melting properties of a composition of Example 12.
FIG. 7 is a picture showing an evaluation result of photo-melting properties after water immersion of the composition of Example 12.
FIG. 8 is a picture showing a result of evaluating photo-melting properties of water swollen products of compositions of Examples 13 to 15.

### Description of Embodiments

Hereinafter, an embodiment of the present invention will be described in detail. Here, the present invention is not limited to the following embodiment.

In this specification, the term "step" includes not only an independent step but also a step that is not explicitly distinguishable from other steps insofar as a desired function of the step is attained. In addition, a numerical range represented by using "to" indicates a range including numerical values described before and after "to" as the minimum value and the maximum value, respectively.

In addition, in this specification, in a case where there are a plurality of substances corresponding to each component in a composition, unless otherwise noted, the content of each component in the composition indicates the total amount of the plurality of substances in the composition. In addition, unless otherwise noted, only one type of exemplary materials may be used, or two or more types thereof may be used in combination.

In addition, in a numerical range described in a stepwise manner in this specification, the upper limit value or the lower limit value of the numerical range in a certain step may be replaced with the upper limit value or the lower limit value of the numerical range in another step. In addition, in the numerical range described in this specification, the upper limit value or the lower limit value of the numerical range may be replaced with a value described in Examples. "A or B" may include either A or B, or may include both.

A composition of one embodiment contains a cross-linked body of a hydrophilic polymer having a cross-linkable functional group (hereinafter, may be referred to as a component (A)), and a photo-radical generating agent (hereinafter, may be referred to as a "component (B)"). The cross-linked body is a hydrophilic polymer cross-linked through a disulfide bond.

### Component (A): Cross-Linked Body of Hydrophilic Polymer Having Cross-Linkable Functional Group

The component (A) is a component to be formed by cross-linking the hydrophilic polymer having the cross-linkable functional group. The cross-linkable functional group is a group capable of forming a new bond by a reaction. The cross-linkable reactive group, for example, may be a carboxy group (-COOH) or an amino group (-NH₂). The hydrophilic polymer may have one type or two or more types of cross-linkable functional groups. The hydrophilic polymer may have at least one type of group selected from the group consisting of a carboxy group and an amino group.

Examples of the hydrophilic polymer having the cross-linkable functional group include a hydrophilic polymer having a carboxy group but no amino group, a hydrophilic polymer having an amino group but no carboxy group, and a hydrophilic polymer having a carboxy group and an amino group.

Examples of the hydrophilic polymer having at least the carboxy group include carboxymethyl cellulose, carboxymethyl chitosan, carboxymethyl dextran, N,N-dicarboxymethyl chitosan, carboxymethyl hexanoyl chitosan, a polylactic acid, an alginic acid, gellan gum, a hyaluronic acid, xanthane gum, pectin, a pectic acid, a polygalacturonic acid, chondroitin 4-sulfate, chondroitin 6-sulfate, dermatan sulfate, succinoglycan, agrobacterium succinoglycan, gum arabic, tragacanth gum, agar, carrageenan, a polylactic acid, a polyglutamic acid, a polyasparagic acid, a polymethacrylic acid, a polyacrylic acid, an acrylic acid/maleic acid copolymer, or salts thereof.

Examples of the hydrophilic polymer having at least the amino group include chitosan, carboxymethyl chitosan, N,N-dicarboxymethyl chitosan, carboxymethyl hexanoyl chitosan, polyethylene imine, polylysine, polyarginine, polyornithine, an aminoethylated acrylic polymer, or salts thereof.

The weight average molecular weight of the hydrophilic polymer having the cross-linkable functional group may be 10000 to 10000000, 100000 to 2000000, or 250000 to 820000. Note that, the weight average molecular weight is a corresponding value in terms of polystyrene using a calibration curve of standard polystyrene by a gel permeation chromatography method (GPC).

The hydrophilic polymer may be polysaccharide with the degree of etherification (DS) of 0.6 or more and 1.5 or less. The degree of etherification of the hydrophilic polymer, for example, may be 0.6 or more and 0.8 or less, or 1.0 or more and 1.5 or less. The degree of etherification is the number of functional groups per one monosaccharide configuring a sugar chain.

The hydrophilic polymer, for example, may be carboxymethyl cellulose. In this case, it is easy to obtain the composition with more excellent photo-melting properties.

The component (A) may be cross-linked by a reactive compound having a disulfide bond and a reactive group capable of forming a bond with the cross-linkable functional group. The reactive group in the reactive compound may be a group capable of forming an amide bond (-C(=O)-NH-) with the cross-linkable functional group.

Examples of the reactive group capable of bonding with the cross-linkable functional group by a reaction include a reactive group capable of forming a bond by a reaction with a carboxy group, and a reactive group capable of forming a bond by a reaction with an amino group. Examples of the reactive group capable of forming the bond by the reaction with the carboxy group include an amino group. Examples of the reactive group capable of forming the bond by the reaction with the amino group include a carboxy group, an ester group, and the like.

Examples of the reactive compound having the disulfide bond and the reactive group capable of forming the bond by the reaction with the carboxy group include cystamine, cystine (such as L(-)-cystine), or salts thereof, and the like.

Examples of the reactive compound having the disulfide bond and the reactive group capable of forming the bond by the reaction with the amino group include a dithiodipropionic acid, a dithiodiglycolic acid, (oxidized) glutathione, a dithiodibutyric acid, and di(N-succinimidyl) 3,3'-dithiodipropionate.

The reactive compound having the disulfide bond and the reactive group capable of forming the bond by the reaction with the cross-linkable functional group may be a compound formed by an oxidation reaction between a thiol group in a compound having a thiol group (-SH) and a reactive group.

Examples of the reactive compound having the thiol group and the reactive group capable of forming the bond by the reaction with the carboxy group include cysteine, 2-aminoethane thiol, 2,5-diamino-1,4-benzene dithiol, or salts thereof.

Examples of the reactive compound having the thiol group and the reactive group capable of forming the bond by the reaction with the amino group include cysteine, a thioglycolic acid, a 11-mercaptoundecanoic acid, (reduced) glutathione, a 4-mercaptobenzoic acid, a 2-mercaptonicotinic acid, and a 3-mercaptonicotinic acid.

The content of the reactive compound may be 10 parts by mass or more and 100 parts by mass or less, on the basis of 100 parts by mass of the hydrophilic polymer.

The component (A) can be formed by a condensation reaction between the hydrophilic polymer and the component having the disulfide bond. The component (A), for example, may be a condensation reaction product of the hydrophilic polymer having the cross-linkable functional group and the reactive compound having the disulfide bond and the reactive group capable of forming the bond by the reaction with the cross-linkable functional group, a condensation reaction product of the hydrophilic polymer having the carboxy group and the reactive compound having the disulfide bond and the amino group, or a condensation reaction product of the hydrophilic polymer having the amino group and the reactive compound having the disulfide bond and the carboxy group.

A preferred combination between the hydrophilic polymer and the reactive compound may be a combination between carboxymethyl cellulose and cystamine. In this case, it is easy to obtain the composition with more excellent photo-melting properties.

In the condensation reaction, a condensation agent may be used. As the condensation agent, for example, a general condensation agent capable of forming a peptide bond (-C(=O)-NH-) by a reaction between a carboxy group and an amino group can be used.

Examples of the condensation agent include carbodiimides such as N,N'-diisopropyl carbodiimide (DIC), N,N'-di-(tert-butyl) carbodiimide, N,N'-dicyclohexyl carbodiimide (DCC), N-(tert-butyl)-N'-ethyl carbodiimide (BEC), N-cyclohexyl-N'-(2-morpholinoethyl) carbodiimide (CMC), 1-ethyl-3-(3-dimethyl aminopropyl) carbodiimide (EDC), and 1-ethyl-3-(3-dimethyl aminopropyl) carbodiimide hydrochloride (EDC.HCl),
imidazoliums such as 1,1'-carbonyl diimidazole (CDI) and 1,1'-carbonyl di(1,2,4-triazole) (CDT),
phosphoniums such as 1H-benzotriazol-1-yl oxytris(dimethyl amino)phosphonium hexafluorophosphate (BOP), 1H-benzotriazol-1-yl oxytripyrrolidinophosphonium hexafluorophosphate (PyBOP), (7-azabenzotriazol-1-yl oxytripyrrolidinophosphonium hexafluorophosphate (PyAOP), chlorotripyrrolidinophosphonium hexafluorophosphate (PyCloP), bromotris(dimethyl amino)phosphonium hexafluorophosphate (Brop), 3-(diethoxyphosphoryl oxy)-1,2,3-benzotriazin-4(3H)-one (DEPBT), and (ethyl cyano(hydroxyimino)acetato-O2)-tri-(1-pyrrolidinyl) phosphonium hexafluorophosphate (PyOxim),
uroniums such as O-(benzotriazol-1-yl)-N,N,N',N'-tetramethyl uronium hexafluorophosphate (HBTU), O-(7-azabenzotriazol-1-yl)-N,N,N',N'-tetramethyl uronium hexafluorophosphate (HATU), O-(benzotriazol-1-yl)-N,N,N',N'-bis(tetramethylene) uronium hexafluorophosphate (HBPyU), O-(benzotriazol-1-yl)-N,N,N',N'-bis(pentamethylene) uronium hexafluorophosphate (HBPipU), O-(6-chlorobenzotriazol-1-yl)-N,N,N',N'-tetramethyl uronium hexafluorophosphate (HCTU), O-(3,4-dihydro-4-oxo-1,2,3-benzotriazin-3-yl)-N,N,N',N'-tetramethyl uronium hexafluorophosphate (HDBTU), O-(2-oxo-1(2H)pyridyl)-N,N,N',N'-tetramethyl uronium hexafluorophosphate (TPTU), O-((ethoxycarbonyl) cyanomethylene amino)-N,N,N',N'-tetramethyl uronium hexafluorophosphate (HOTU), O-((ethoxycarbonyl) cyanomethylene amino)-N,N,N',N'-tetramethyl uronium tetrafluoroborate (TOTU), N,N,N',N'-tetramethyl-O-(N-succinimidyl) uronium hexafluorophosphate (HSTU), N,N,N',N'-tetramethyl-O-(N-succinimidyl) uronium tetrafluoroborate (TSTU), dipyrrolidino(N-succinimidyl oxy)carbenium hexafluorophosphate (HSPyU), S-(1-oxide -2-pyridyl)-N,N,N',N'-tetramethyl thiouronium tetrafluoroborate (TOTT), and ((((1-cyano-2-ethoxy-2-oxoethylidene) amino)oxy)-4-morpholinomethylene) dimethyl ammonium hexafluorophosphate (COMU),
a triazine-based condensation agent such as 4-(4,6-dimethoxy-1,3,5-triazin-2-yl)-4-methyl morpholinium chloride n-hydrate (DMT-MM),
diphenyl phosphoryl azide (DPPA),
1-ethoxycarbonyl-2-ethoxy-1,2-dihydroquinoline (EEDQ),
di-tert-butyl dicarbonate (Boc₂O), and the like.

The content of the condensation agent may be 80 parts by mass or more and 180 parts by mass or less, on the basis of 100 parts by mass of the hydrophilic polymer.

In the condensation reaction, a reaction aid may be used. Examples of the reaction aid include 4-dimethyl aminopyridine (DMAP), 1-hydroxybenzotriazole (HOBt), N-hydroxysuccinimide (HOSu), and the like.

The content of the reaction aid may be 15 parts by mass or more and 60 parts by mass or less, on the basis of 100 parts by mass of the condensation agent.

The temperature of the condensation reaction, for example, may be 0 to 50°C. A condensation reaction time, for example, may be 0.5 to 24 hours.

### Component (B): Photo-Radical Generating Agent

When the composition is irradiated with light, the component (B) can be a component reacting with thiyl radicals to be generated or a component generating photo-induced radicals. As the photo-radical generating agent, a photo-radical polymerization initiator or the like can be used. Only one type of the component (B) may be used alone, or two or more types thereof may be used in combination.

Examples of the component (B) include an intermolecular cleavage type photo-radical polymerization initiator, a hydrogen abstraction type photo-radical polymerization initiator, and the like. Examples of the intermolecular cleavage type photo-radical polymerization initiator include a benzyl ketal-based photo-radical polymerization initiator; an α-hydroxyacetophenone-based photo-radical polymerization initiator; a benzoin-based photo-radical polymerization initiator; an aminoacetophenone-based photo-radical polymerization initiator; an oxime ketone-based photo-radical polymerization initiator; an acyl phosphine oxide-based photo-radical polymerization initiator; a titanocene-based photo-radical polymerization initiator; a S-phenyl thiobenzoate polymerization initiator; high-molecular-weight derivatives thereof, and the like. Examples of the hydrogen abstraction type photo-radical polymerization initiator include a benzophenone-based photo-radical initiator, a thioxanthone-based photo-radical polymerization initiator, an anthraquinone-based photo-radical polymerization initiator, and the like.

The component (B) may be a photo-radical generating agent with water solubility. In this case, the photo-melting properties of the composition are more remarkable. The "photo-radical generating agent with the water solubility" is a photo-radical generating agent that is dissolved in water at 0.2% by mass or more (0.2 g or more of the photo-radical generating agent is soluble in 100 g of water). Being soluble in water is determined by a visual contact.

Specific examples of the photo-radical generating agent with the water solubility include 2-hydroxy-4'-(2-hydroxyethoxy)-2-methyl propiophenone (for example, Product Name: H1361 (manufactured by Tokyo Chemical Industry Co., Ltd.) and lithium phenyl (2,4,6-trimethyl benzoyl) phosphinate (Product Name: L0290, manufactured by Tokyo Chemical Industry Co., Ltd.).

The content of the component (B) may be 40 parts by mass or more, or 200 parts by mass or more, on the basis of 100 parts by mass of the component (A).

The content of the component (B), for example, may be greater than 0% by mass and 0.6% by mass or less, or may be greater than 0% by mass and 3% by mass or less, on the basis of the total mass of the composition.

The composition may further contain water, or may not contain water. In the case of containing water, since the composition contains the cross-linked body of the hydrophilic polymer, a gelled composition (hydrogel) can be formed. In the case of not containing water, the composition can be used as a powdered composition. The content of water in the composition, for example, may be 90% by mass or more, or 95% by mass or more, and may be 99% by mass or less, on the basis of the total mass of the composition.

The composition, for example, may contain sodium hydroxide together with water. In this case, it is possible to more effectively photo-melt the composition.

The composition may further contain other components in addition to each component described above. The components can be used by suitably selecting known components. The total content of the other components may be 0 to 95% by mass, 0.01 to 50% by mass, or 0.1 to 10% by mass, on the basis of the total amount of the composition.

The composition, for example, can be prepared by a method including a step of mixing or kneading the component (A) and the component (B), water, and the components to be added as necessary. The mixing and kneading can be performed by suitably combining a general stirrer, a general mortar machine, and a general disperser such as a three-roll mill, a ball mill, and a bead mill.

The composition, for example, may be in the shape of a powder, a gel, a film, or the like. Since the composition according to this embodiment contains the cross-linked hydrophilic polymer, a hydrogel containing water inside can be formed.

The composition has properties in which the disulfide bond in the component (A) is cut by light irradiation, and the molecular weight of the compound having the disulfide bond is lowered so that the composition is melted. By using such properties, since the composition according to this embodiment has the properties of being melted by the light irradiation, the composition can be used as a scaffold material for a cell culture.

A molten product of the composition according to one embodiment can be produced by a method including a step of irradiating the composition described above with light, and of melting at least a part of the composition to form the molten product of the composition.

The light in the light irradiation is not particularly limited, and for example, may be ultraviolet light or visible light. The wavelength of the light in the light irradiation may be 150 to 830 nm. The light irradiation, for example, can be performed by using a light irradiation apparatus in a condition where an irradiance level is 100 mJ/cm² or more. Note that, the irradiance level indicates the product of an illuminance and an irradiation time (seconds). In addition, examples of a light source for ultraviolet light irradiation or visible light irradiation include a low-pressure mercury lamp, a medium-pressure mercury lamp, a highpressure mercury lamp, a metal halide lamp, a LED lamp, and the like. The light irradiation may be directly performed with respect to the composition, or may be performed through glass or the like.

The light irradiation of the composition may be performed while heating. A heating condition, for example, may be 40°C to 200°C.

A kit according to one embodiment contains the cross-linked body of the hydrophilic polymer having the cross-linkable functional group, and the photo-radical generating agent, and the cross-linked body is the hydrophilic polymer cross-linked through the disulfide bond. The kit, for example, may be a kit for producing the scaffold material for the cell culture.

A kit according to another embodiment contains the hydrophilic polymer having the cross-linkable functional group, the reactive compound having the disulfide bond and the reactive group capable of forming the bond with the cross-linkable functional group, the photo-radical generating agent, and the condensation agent. The kit may further contain the reaction aid. The kit may be the kit for producing the scaffold material for the cell culture.

### Examples

Hereinafter, the present invention will be described in more detail by using Examples. Here, the present invention is not limited to Examples described below.

As carboxymethyl cellulose (CMC), two types of A and B described below were prepared.
Carboxymethyl Cellulose A: manufactured by Tokyo Chemical Industry Co., Ltd., Molecular Weight: to 350000, n = 1050
Carboxymethyl Cellulose B: manufactured by Daicel Corporation, Molecular Weight: 250000, Degree of Etherification (DS) = 0.6 to 0.8
1-Ethyl-3-(3-Dimethyl Aminopropyl) Carbodiimide Hydrochloride (EDC)
N-Hydroxysuccinimide (NHS)
Cystamine Dihydrochloride

A photo-radical generating agent described below was prepared.
2,4,6-Trimethyl Benzoyl-Diphenyl Phosphine Oxide (Product Name Omnirad TPO H)
2-Hydroxy-1-(4-(4-(2-Hydroxy-2-Methyl Pionyl) Benzyl) Phenyl)-2-Methyl Propan-1-One (Product Name Omnirad 127): manufactured by IGM Resins B.V.
1-[4-(2-Hydroxyethoxy)-Phenyl]-2-Hydroxy-Methyl Propanone (Product Name Omnirad 2959): manufactured by IGM Resins B.V.
2-Hydroxy-2-Methyl-1-Phenyl Propanone (Product Name Omnirad 1173): manufactured by IGM Resins B.V.
2-Hydroxy-4'-(2-Hydroxyethoxy)-2-Methyl Propiophenone (H1361): manufactured by Tokyo Chemical Industry Co., Ltd.
Lithium Phenyl(2,4,6-Trimethyl Benzoyl) Phosphinate (L0290): manufactured by Tokyo Chemical Industry Co., Ltd.

Compositions of Examples 1 to 15 containing a cross-linked body of a hydrophilic polymer, a photo-radical generating agent, and water at a composition shown in the following table were prepared. A specific preparation method is as follows.

A condensation agent and a reaction aid were added to an aqueous solution in which the hydrophilic polymer was dissolved in water by stirring at an amount shown in the following table, and were stirred for a given length of time to be dissolved. Simultaneously, an aqueous solution was prepared in which the photo-radical generating agent and the reactive compound were dissolved in water by stirring. After that, two types of obtained aqueous solutions were mixed.

In Examples 14 and 15, a solution containing the photo-radical generating agent, cystamine, and sodium hydroxide was heated during the addition in order to uniformly mix the photo-radical generating agent to a maximum extent.

The prepared composition was gelled. The check for the gelation was performed by checking that the solution was solidified into the shape of a jelly with a touch and a visual contact.

### <Evaluation of Photo-Melting Properties>

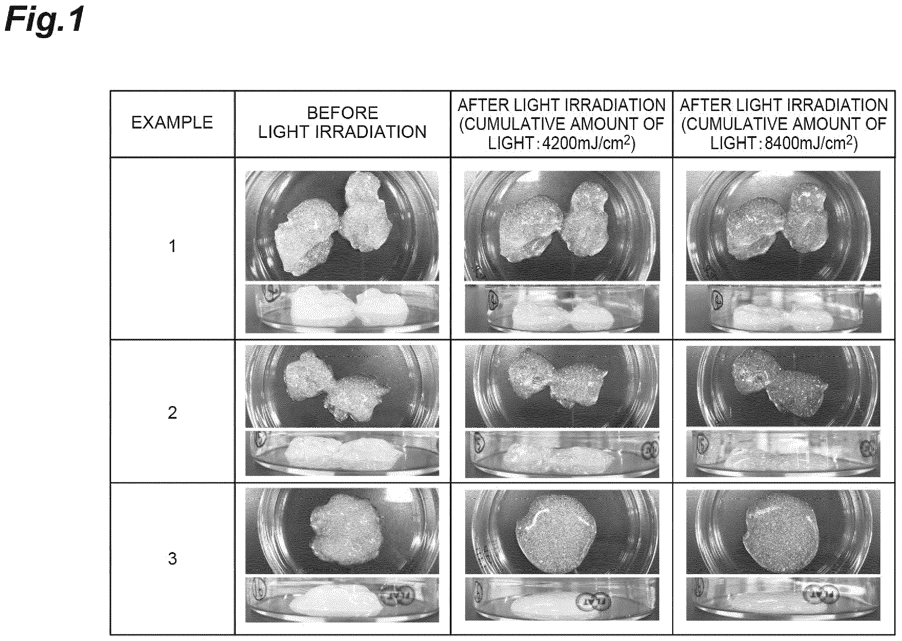

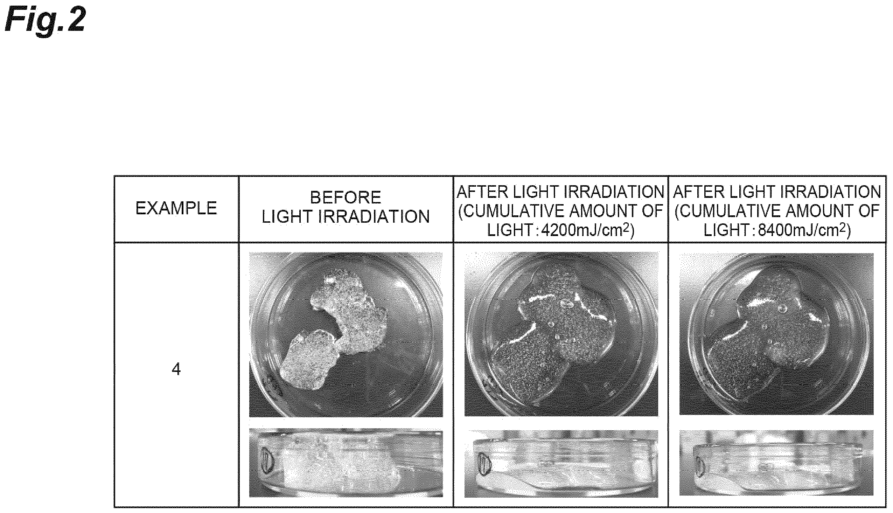

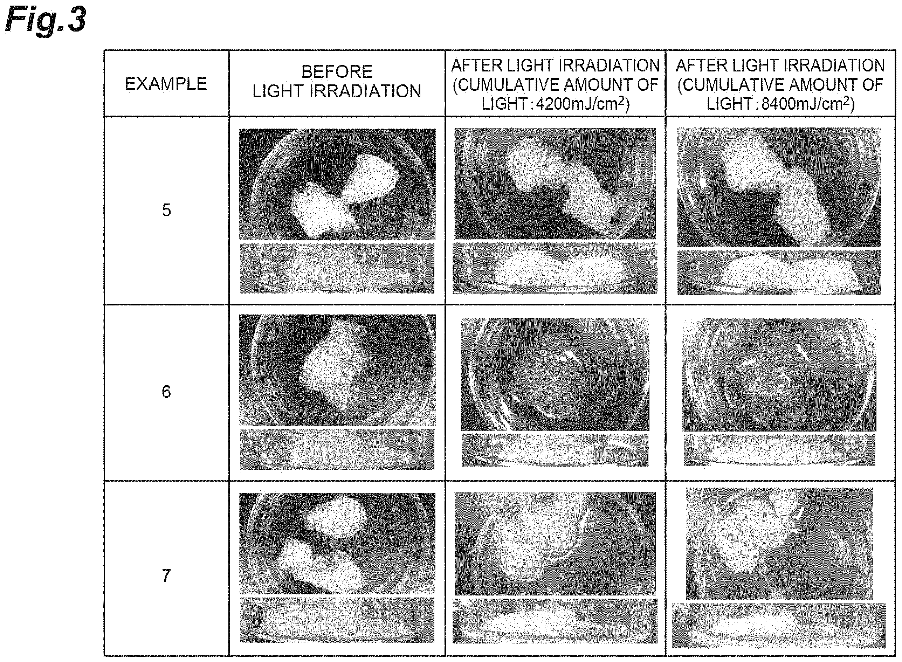

The composition prepared by the method described above was irradiated with light at a wavelength of 365 nm by using a mercury lamp. For the compositions of Examples 1 to 7, the photo-melting properties of the composition was evaluated on the basis of the result of performing the light irradiation in a condition where the cumulative amount of light was 4200 mJ/cm² and the cumulative amount of light was 8400 mJ/cm². In the evaluation of the photo-melting properties of the compositions of Examples 1 to 7, "A" in the table indicates that it was possible to check deformation seen as photo-melting, and "B" indicates that it was possible to check slight photo-melting. In a case where it was not possible to check the photo-melting, it was evaluated as "C". FIG. 1 is a picture showing an evaluation result of the photo-melting properties of the compositions of Examples 1 to 3. FIG. 2 is a picture showing an evaluation result of the photo-melting properties of the composition of Example 4. FIG. 3 is a picture showing an evaluation result of the photo-melting properties of the compositions of Examples 5 to 7.

**[Table 1]**

| Items | | | Comparative Example 1 | Example 1 | Example 2 | Example 3 | Example 4 |
|---|---|---|---|---|---|---|---|
| Cross-linked body of hydrophilic polymer | CMC | Type | A | A | A | A | A |
| | | Amount (g) | 0.30 | 0.30 | 0.30 | 0.30 | 0.30 |
| | EDC (g) | | 0.53 | 0.53 | 0.53 | 0.26 | 0.53 |
| | NHS (g) | | 0.32 | 0.32 | 0.32 | 0.16 | 0.32 |
| | Cystamine dihydrochloride (g) | | 0.15 | 0.075 | 0.038 | 0.15 | 0.15 |
| Photo-radical generating agent | Type | | TPO | TPO | TPO | TPO | H1361 |
| | Amount (g) (wt%) | | - | 0.30g (1wt%) | 0.30g (1wt%) | 0.30g (1wt%) | 0.06g (0.2wt%) |
| Water (mL) | | | 30 | 30 | 30 | 30 | 30 |
| Evaluation | Photo-melting | | C | B | B | B | A |

**[Table 2]**

| Items | | | Example 5 | Example 6 | Example 7 |
|---|---|---|---|---|---|
| Cross-linked body of hydrophilic polymer | CMC | Type | A | A | A |
| | | Amount (g) | 0.30 | 0.30 | 0.30 |
| | EDC (g) | | 0.53 | 0.53 | 0.53 |
| | NHS (g) | | 0.32 | 0.32 | 0.32 |
| | Cystamine dihydrochloride (g) | | 0.075 | 0.038 | 0.150 |
| Photo-radical generating agent | Type | | Omnirad 127 | Omnirad2959 | Omnirad 1173 |
| | Amount (g) (wt%) | | 0.30g (1wt%) | 0.30g (1wt%) | 0.30g (1wt%) |
| Water (mL) | | | 30 | 30 | 30 |
| Evaluation | | Photo-melting | B | A | A |

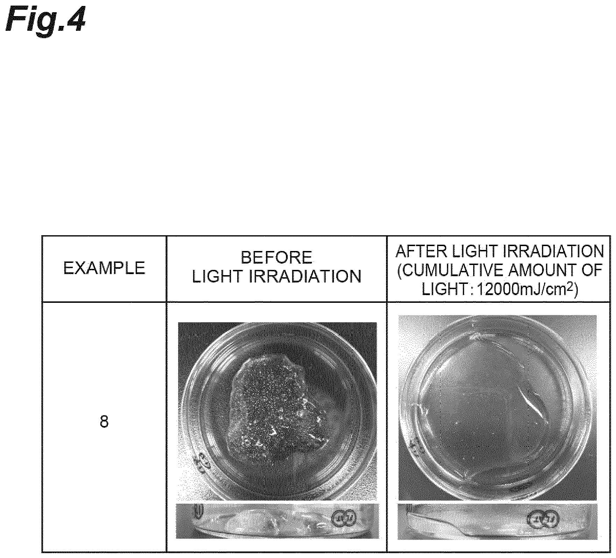

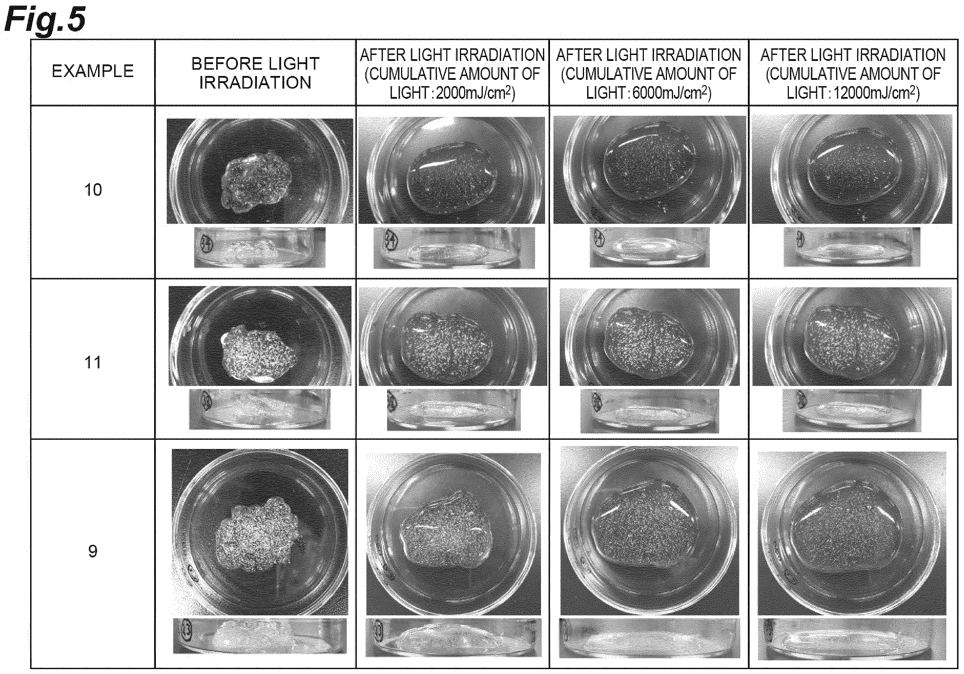

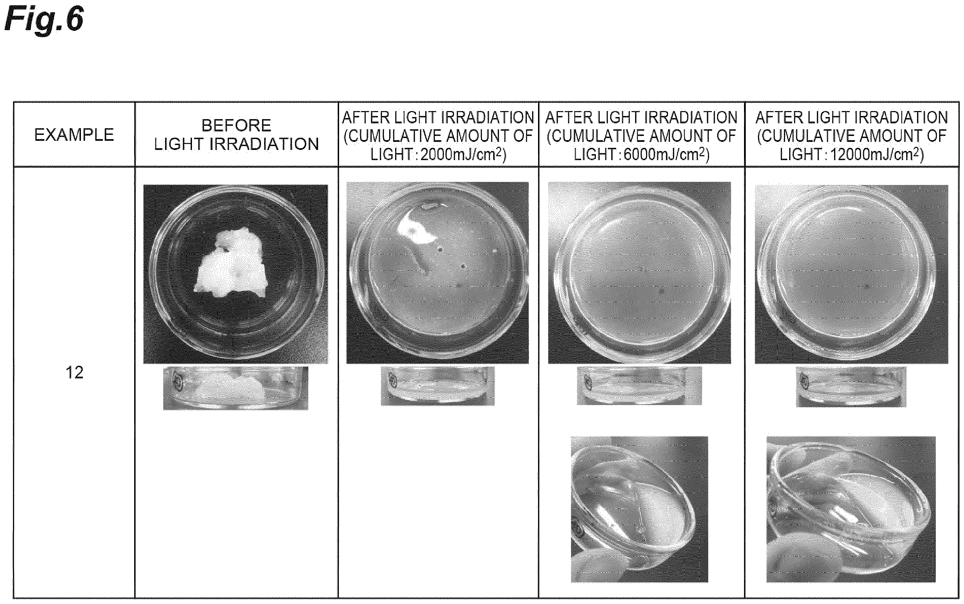

For the compositions of Examples 8 to 12, the photo-melting properties of the composition was evaluated on the basis of the result of performing the light irradiation in a condition where the cumulative amount of light was 2000 mJ/cm^{2,} the cumulative amount of light was 6000 mJ/cm², and the cumulative amount of light was 12000 mJ/cm². FIG. 4 is a picture showing an evaluation result of the photo-melting properties of the composition of Example 8. FIG. 5 is a picture showing an evaluation result of the photo-melting properties of the compositions of Examples 9 to 11. FIG. 6 is a picture showing an evaluation result of the photo-melting properties of the composition of Example 12. It was indicated that in the case of containing sodium hydroxide (NaOH), more remarkable photo-melting properties were exhibited (a comparison between Example 12 and Examples 11 and 12).

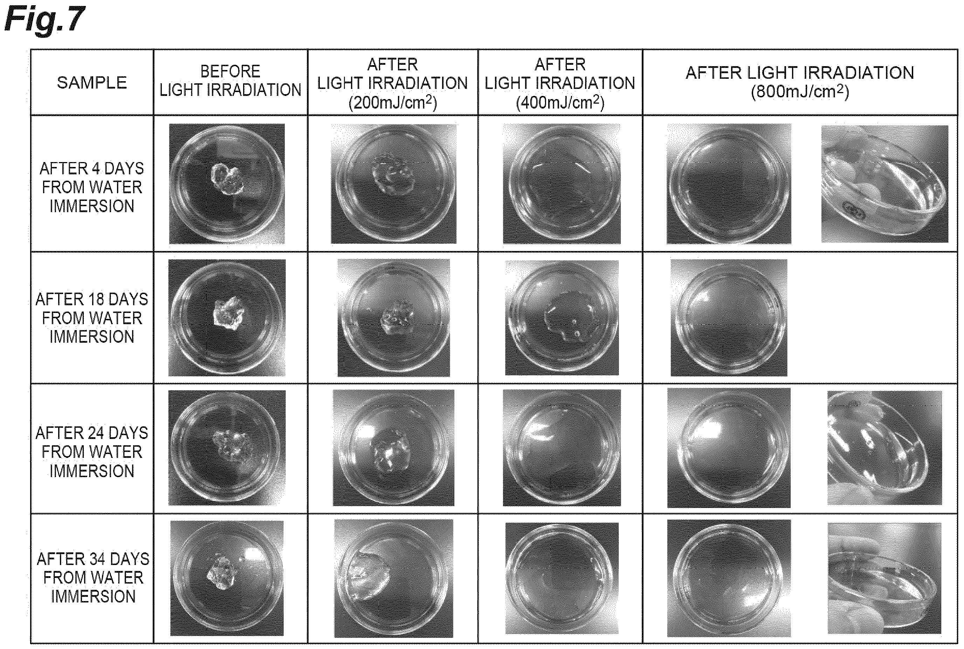

The composition of Example 12 was immersed in water for a predetermined period of time, and then, a sample obtained was irradiated with light at a wavelength of 365 nm by using a mercury lamp. FIG. 7 shows the result of irradiating the sample with light in a condition where the cumulative amount of light was 200 mJ/cm², 400 mJ/cm², and 800 mJ/cm². As shown in FIG. 7, it was checked that the photo-melting properties were exhibited even after 34 days from the period for which the composition of Example 12 was immersed in water. From the result of FIG. 7, it was checked that the photo-radical generating agent was eluted, and the photo-melting properties were not lost even in the case of being immersed in water for a long period of time. According to the immersion, the composition was swollen by water, and the amount of light required to melt the composition into the shape of a liquid was greatly reduced.

**[Table 3]**

| Items | | | Example 8 | Example 9 | Example 10 | Example 11 | Example 12 |
|---|---|---|---|---|---|---|---|
| Cross-linked body of hydrophilic polymer | CMC | Type | A | A | B | A | B |
| | | Amount (g) | 0.30 | 0.30 | 0.60 | 0.30 | 0.60 |
| | EDC (g) | | 0.13 | 0.26 | 0.26 | 0.26 | 0.26 |
| | NHS (g) | | 0.08 | 0.16 | 0.16 | 0.16 | 0.16 |
| | Cystamine dihydrochloride (g) | | 0.15 | 0.15 | 0.15 | 0.15 | 0.15 |
| Photo-radical generating agent | Type | | H1361 | H1361 | H1361 | L0290 | L0290 |
| | Amount (g) (wt%) | | 0.06g (0.2wt%) | 0.06g (0.2wt%) | 0.06g (0.2wt%) | 0.06g (0.2wt%) | 0.3g (1wt%) |
| Water (mL) | | | 30 | 30 | 30 | 30 | 30.5 |
| 1M NaOH (mL) | | | - | - | - | - | 1.5 |

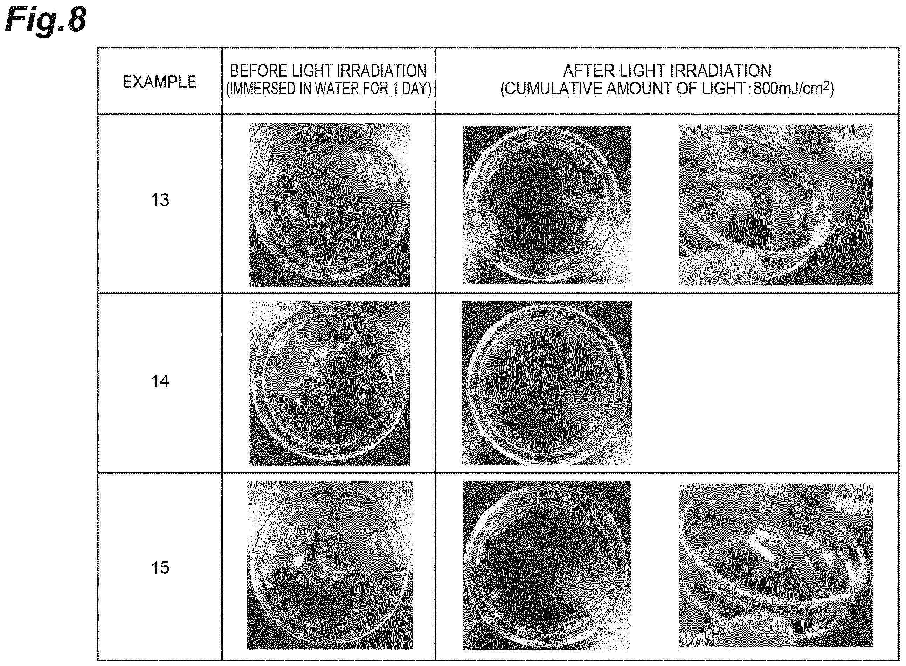

For the compositions of Examples 13 to 15, the photo-melting properties of the composition were evaluated on the basis of the result of performing the light irradiation in a condition where the cumulative amount of light was 800 mJ/cm². FIG. 8 is a picture showing an evaluation result of the photo-melting properties when irradiating water swollen products obtained by immersing the compositions of Examples 13 to 15 in water with light. The compositions of Examples 13 to 15 were photo-melted into the shape of a liquid in a condition where the cumulative amount of light was 800 mJ/cm².

**[Table 4]**

| Items | | | Example 13 | Example 14 | Example 15 |
|---|---|---|---|---|---|
| Cross-linked body of hydrophilic polymer | CMC | Type | B | B | B |
| | | Amount (g) | 0.90 | 0.90 | 0.90 |
| | EDC (g) | | 0.26 | 0.26 | 0.26 |
| | NHS (g) | | 0.16 | 0.16 | 0.16 |
| | Cystamine dihydrochloride (g) | | 0.15 | 0.15 | 0.15 |
| Photo-radical generating agent | Type | | H1361 | H1361 | H1361 |
| | Amount (g) (wt%) | | 0.18g (0.6wt%) | 0.90g (3wt%) | 0.30g (1wt%) |
| Water (mL) | | | 30 | 30 | 30 |
| 1M NaOH (mL) | | | 1.5 | 1.5 | 1.5 |

A composition of Example 16 was prepared as with Example 13, except that the amount of CMC was changed to 0.60 g. It was checked that the composition was gelled. In the composition of Example 13, the elasticity of the gel was increased compared to the composition of Example 16.

The composition of Example 16 having a composition shown in Table 5 was prepared. A specific preparation method was the same as that in Examples 1 to 15. The prepared composition of Example 16 was gelled.

**[Table 5]**

| Items | | | Example 16 |
|---|---|---|---|
| Cross-linked body of hydrophilic polymer | CMC | Type | A |
| | | Amount (g) | 0.6 |
| | EDC (g) | | 0.26 |
| | NHS (g) | | 0.16 |
| | Cystamine dihydrochloride (g) | | 0.20 |
| Photo-radical generating agent | Type | | L0290 |
| | Amount (g) (wt%) | | 0.3g (1wt%) |
| Water (mL) | | | 30 |
| 1M NaOH (mL) | | | 1.5 |

The photo-melting properties of the composition of Example 16 were evaluated by the same method as that of the compositions of Examples 8 to 12.

It was indicated that the composition of Example 16 in which the amount of cystamine was increased also had the photo-melting properties.

## Claims

1. A composition, comprising:
a cross-linked body of a hydrophilic polymer comprising a cross-linkable functional group; and
a photo-radical generating agent,
wherein the cross-linked body is a hydrophilic polymer cross-linked through a disulfide bond.

2. The composition according to claim 1,
wherein the cross-linkable functional group comprises at least one type of group selected from the group consisting of a carboxy group and an amino group.

3. The composition according to claim 1 or 2,
wherein the hydrophilic polymer is carboxymethyl cellulose.

4. The composition according to any one of claims 1 to 3,
wherein the cross-linked body is a condensation reaction product of the hydrophilic polymer and a reactive compound comprising a disulfide bond and a reactive group capable of forming a bond by a reaction with the cross-linkable functional group.

5. The composition according to any one of claims 1 to 4,
wherein the cross-linked body is a condensation reaction product of a hydrophilic polymer comprising a carboxy group and a reactive compound comprising a disulfide bond and an amino group, or a condensation reaction product of a hydrophilic polymer comprising an amino group and a reactive compound comprising a disulfide bond and a carboxy group.
